# EUROPEAN PATENT APPLICATION

(11) **EP 4 074 577 A1**
(43) Date of publication of application: **19.10.2022**
(21) Application number: 22166042.6
(22) Date of filing: 31.03.2022
(51) Int. Cl.: B62B 9/10

(54) **STROLLER**

(30) Priority: 13.04.2021 CN 202110393450
(71) Applicant: Wonderland Switzerland AG, 6312 Steinhausen (CH)
(72) Inventor: YU, Xiong, Guangdong (CN); CHEN, Yanmin, Guangdong (CN); ZENG, Haibo, Guangdong (CN)
(74) Representative: Pfenning, Meinig & Partner mbB

(57) **Abstract**

The present disclosure discloses a stroller comprising a carriage frame, a plurality of wheels mounted under the carriage frame respectively, a seat plate fixed to the carriage frame, a backrest plate connected to the carriage frame and angled relative to the seat plate, and a lifting belt connecting the backrest plate with a surface of the seat plate. The backrest plate of the stroller of the present disclosure has good stability, which can prevent the stroller from overturning after being pressed.

## Description

### TECHNICAL FIELD

The disclosure relates to a stroller, in particular to a stroller that can prevent overturning.

### BACKGROUND

A stroller is a tool for an infant or a child (hereinafter collectively referred to as "infant") to move the infant conveniently. A backrest of an existing stroller may usually be adjusted in angle relative to a seat cushion, thereby providing a suitable backrest angle for the infant.

However, when the backrest angle is larger, the center of gravity of the infant sitting in the stroller may be located behind the seat plate, causing the stroller to have a risk of overturning. This is not desired by the operator of the stroller.

Since the backrest of the stroller is usually a rigid part that is not firmly fixed (considering the backrest angle adjustment and comfort), when the infant is leaning against the backrest of the stroller, the backrest may be displaced downwards, causing the center of gravity of the infant to further move rearward, so as to increase the risk of overturning the stroller.

### SUMMARY

An object of the present disclosure is to provide a stroller capable of preventing overturning.

Another object of the present disclosure is to provide a stroller which can alleviate or eliminate at least one of the above-mentioned drawbacks.

In order to achieve the above object, the present disclosure provides a stroller, which includes: a carriage frame; a plurality of wheels mounted under the carriage frame respectively; a seat plate fixed to the carriage frame; a backrest plate connected to the carriage frame and angled relative to the seat plate; and a lifting belt connecting a rear end of the backrest plate with a surface of the seat plate.

In an embodiment, the stroller further includes a back cushion fixed to a backrest frame and the seat plate and receiving the backrest plate.

In an embodiment, the back cushion wraps the backrest plate.

In an embodiment, a connecting portion is formed on a rear surface of the backrest plate, an end of the lifting belt passes through the connecting portion and is fixed with a buckle, and the connecting portion prevents the buckle from passing through the connecting portion.

In an embodiment, an opening is formed on a lower side of the back cushion, and the lifting belt passes through the opening.

In an embodiment, a rear surface of the back cushion is formed with a through portion through which a first securing belt passes to secure the back cushion horizontally to the backrest frame, a lower end of the back cushion is secured to the seat plate by two second securing belts, and the lifting belt is positioned between the two second securing belts.

In an embodiment, a rear surface of the back cushion is formed with a through portion through which a first securing belt passes to secure the back cushion horizontally to the carriage frame, and a lower end of the back cushion is secured to the seat plate by two second securing belts.

In an embodiment, the back cushion has a folded portion that can be folded to expose an interior of the back cushion so that the backrest plate can be placed into the back cushion.

In an embodiment, the lifting belt connects the seat plate and a front surface or a rear surface of the backrest plate.

In an embodiment, the lifting belt may apply a pulling force between the seat plate and the backrest plate.

In an embodiment, the stroller further includes a seat cushion, which covers the seat plate and is integrally formed with the back cushion.

In an embodiment, the backrest plate is made of PE, and the buckle is a Chinese character " 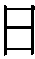 " shaped buckle.

In an embodiment, the stroller further includes a backrest frame which is fixed to the seat plate or the carriage frame and is positioned on or above the seat plate, and the backrest plate is connected to the carriage frame by being connected to the backrest frame.

In an embodiment, a distance of the lifting belt between the buckle and the seat plate is adjustable.

The backrest plate of the stroller of the present disclosure has good stability, which can prevent the stroller from overturning after being pressed. In the present disclosure, the lifting belt is secured to the back of the backrest and in a hole of the seat plate, which may prevent the backrest from moving to a location under the seat plate after being pressed, and prevent the stroller from overturning.

### BRIEF DESCRIPTION OF THE DRAWINGS

Various objects, features and advantages of the present disclosure will become more apparent from consideration of the following detailed description of the preferred embodiments of the present disclosure in conjunction with the accompanying drawings. The drawings are merely exemplary illustrations of the disclosure and are not necessarily drawn to scale. Throughout the drawings, the same reference numbers refer to the same or like parts.
Fig. 1 is a perspective view of a stroller of the present disclosure;
Fig. 2 is a front perspective view of the stroller of the present disclosure;
Fig. 3 is a rear perspective view of the stroller of the present disclosure;
Fig. 4 is a schematic diagram of a backrest plate and a seat plate of the present disclosure as well as related connecting portions;
Fig. 5 is a schematic perspective view of some components of the stroller of the present disclosure;
Fig. 6 is a schematic diagram of some components of the stroller of the present disclosure;
Fig. 7 is a schematic diagram of the backrest plate and the seat plate of the stroller in a position relative to each other; and
Fig. 8 is a schematic diagram of the backrest plate and the seat plate of the stroller in another position relative to each other.

### DETAILED DESCRIPTION

In order to further illustrate the principle and structure of the present disclosure, the preferred embodiments of the present disclosure are now described in detail with reference to the accompanying drawings. However, the embodiments are only used for illustration and explanation, and cannot be used to limit the protection scope the present disclosure.

The terminology used in this disclosure is for the purpose of describing particular embodiments only and is not intended to limit the disclosure. As used in this disclosure and the appended claims, the singular forms "a" and "the" are intended to include the plural forms as well, unless the context clearly dictates otherwise. It will also be understood that the term "and/or" as used herein refers to and includes any and all possible combinations of one or more of the associated listed items.

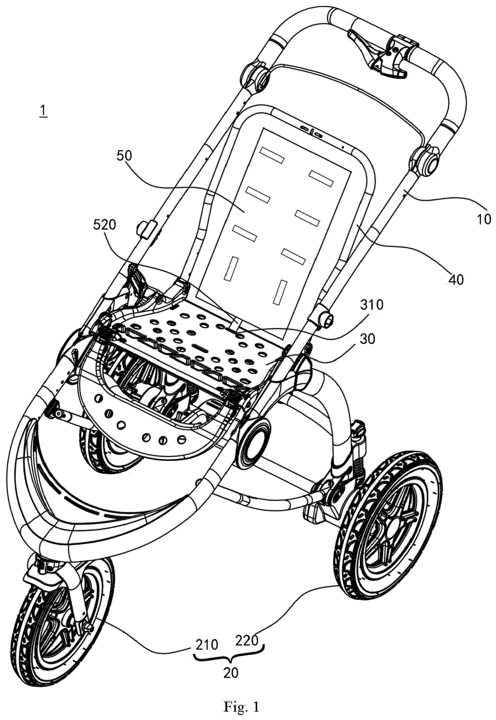

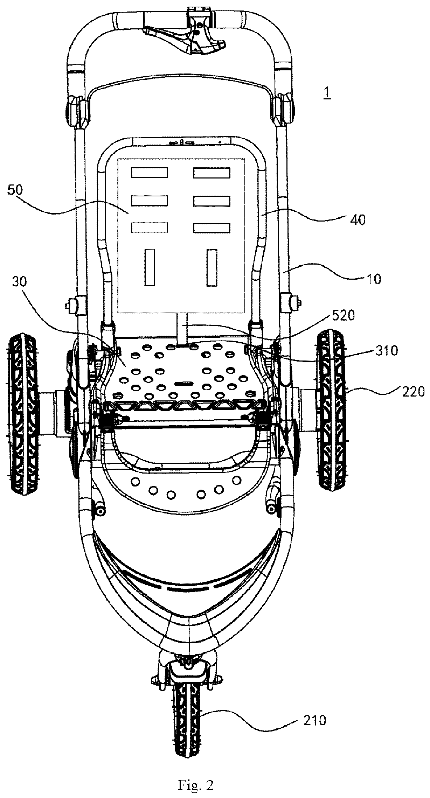

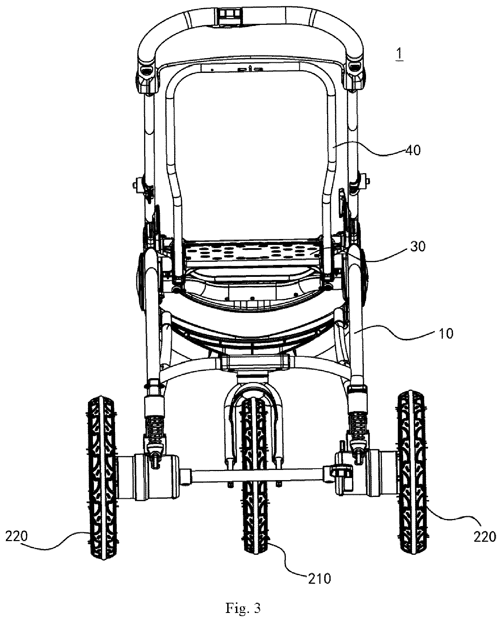

Fig. 1 is a perspective view of a stroller 1 of the present disclosure, Fig. 2 is a front perspective view of the stroller 1 of the present disclosure, and Fig. 3 is a rear perspective view of the stroller 1 of the present disclosure. A position of the backrest plate 50 is schematically shown in each of Figs. 1 and 2. It should be noted that, in order to illustrate the connection relationship about a lifting belt 520, the backrest plate 50 is shown as being separated from the seat plate 30 by a certain distance. In fact, the backrest plate 50 directly contacts an upper surface of the seat plate 30.

As shown in Figs. 1 to 3, the stroller 1 include: a carriage frame 10; a plurality of wheels 20 mounted under the carriage frame 10 respectively; a seat plate 30 fixed to the carriage frame 10; a backrest plate 50 which may be connected to the carriage frame 10 and angled relative to the seat plate 30; a lifting belt 520 secured to the seat plate 30 and a rear surface of the backrest plate 50. Alternatively, lifting belt 520 may be secured to the seat plate 30 and a front surface of the backrest plate 50, which is not limited thereto. The backrest plate 50 may be made of PE. Alternatively, the backrest plate 50 may be made of other suitable materials, such as plastic, metal, wood, or the like.

In this embodiment, the stroller 1 may further include a backrest frame 40 which is secured to the seat plate 30 or the carriage frame 10 and substantively positioned on or above the seat plate 30. The backrest plate 50 may be finally connected to the carriage frame 10 by being connected to the backrest frame 40. In other embodiments (not shown in the figures), the backrest plate 50 may be connected directly to the carriage frame 10 (i.e., without the backrest frame 40). In an embodiment, the backrest frame 40 is rotatable relative to the seat plate 30. In another embodiment, the backrest frame 40 may be secured to the seat plate 30 and cannot rotate relative to the seat plate 30.

The plurality of wheels 20 may include one front wheel 210 and two rear wheels 220. Alternatively, the plurality of wheels 20 may include two front wheels 210 and two rear wheels 220. In general, when an infant, e.g., having a weight of 15 kg, is sitting or lying in the stroller, and the backrest frame 40 and the backrest plate 50 are rotated to a maximum angle relative to the seat plate 30, the center of gravity of the stroller is located between the seat plate 30 and the rear wheels 220.

The seat plate 30 is used for an infant to sit on and is generally arranged substantially horizontally. The backrest plate 50 may be secured directly or indirectly to the backrest frame 40. Alternatively, the backrest plate 50 may be directly or indirectly secured to the carriage frame 10.

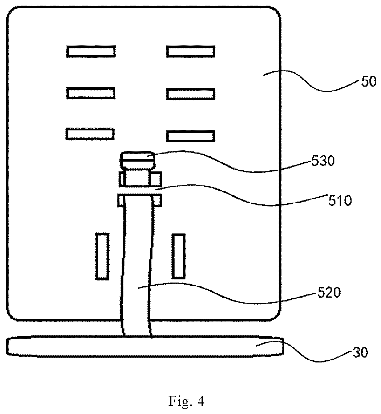

Fig. 4 is a schematic diagram of the backrest plate 50 and seat plate 30 of the present disclosure as well as related connecting components. Fig. 4 shows a back surface of the backrest plate 50. As shown in Fig. 4, the backrest plate 50 may be provided with a connecting portion 510. The connection portion 510 may be formed as two recesses communicating with each other. The lifting belt 520 may enter into the connection portion 510 from one recess and extend out of the connection portion 510 from the other recess so as to pass through the connecting portion 510. After an upper end of the lifting belt 520 passes through the connecting portion 510, a buckle 530 may be secured to the upper end of the lifting belt 520. The buckle 530 is, for example, a Chinese character " 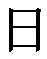 " shaped buckle. The buckle 530 may be fixed on the lifting belt 520 to prevent the lifting belt 520 from moving downward to pass away the connecting portion 510. Alternatively, no buckle 530 may be provided, and in this case, the upper end of the lifting belt 520 is directly secured to the connecting portion 510. A lower end of the lifting belt 520 may pass through a hole 310 on the seat plate 30 and be knotted, so that the lower end of the lifting belt 520 cannot move upward to pass away the hole 310. The position of the buckle 530 on the lifting belt 520 can be adjusted, thereby adjusting a length of the lifting belt 520 between the connecting portion 510 and the seat plate 30. A plurality of through holes 540 may be formed on the backrest plate 50 to reduce the weight of the backrest plate 50 and save materials. Although eight through holes 540 are shown in Fig. 4, the backrest plate 50 of the present disclosure may have other numbers of through holes 540. In another embodiment, the connecting portion 510 may also be provided on the front surface of the backrest plate 50.

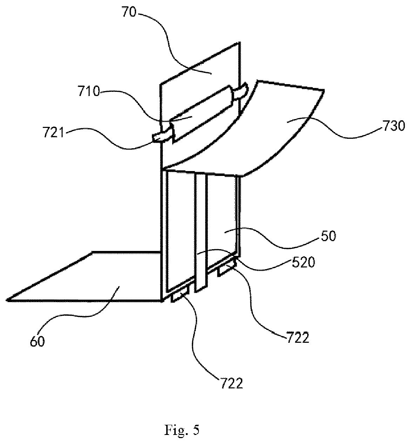

Fig. 5 is a schematic perspective view of some components of the stroller 1 of the present disclosure. The stroller 1 may also include a back cushion 70. The back cushion 70 may be secured to the backrest frame 40 and the seat plate 30. The back cushion 70 may form a cavity to accommodate the backrest plate 50. A rear surface of the back cushion 70 may be formed with a through portion 710. The through portion 710 may be a substantially horizontal channel. A first securing belt 721 may pass through the through portion 710 and be secured to the backrest frame 40. A lower end of the back cushion 70 may be formed with a second securing belt 722. In this embodiment, the second securing belt 722 is formed on both sides of the lower end of the back cushion 70. The second securing belt 722 may be secured to the seat plate 30. The back cushion 70 may also be formed with a folded portion 730. The folded portion 730 may be folded upward to expose an interior of the back cushion 70. The folded portion 730 may allow the backrest plate 50 to be placed into the back cushion 70 conveniently. An edge of the folded portion 730 may be provided with a sealing means (e.g., a zipper) so that the interior of the back cushion 70 cannot be undesirably opened. In an embodiment that the backrest frame 40 is not included, the back cushion 70 may be secured to the carriage frame 10 and the seat plate 30, and the first securing belt 721 may pass through the through portion 710 and be secured to the carriage frame 10.

The lifting belt 520, the first securing belt 721 and the second securing belt 722 of the present disclosure may be woven or unwoven. The lifting belt 520, the first securing belt 721 and the second securing belt 722 of the present disclosure can be flexible and can bear the required pulling force without apparent elongation.

The stroller 1 further include a seat cushion 60. The seat cushion 60 covers the upper surface of the seat plate 30. Alternatively,, the seat cushion 60 wraps the seat plate 30. The seat cushion 60 is integrally formed with the back cushion 70, as shown in Fig. 5. Alternatively, the seat cushion 60 is formed separately from the back cushion 70. The seat cushion 60 and the back cushion 70 is formed of flexible or elastic materials to provide a comfortable ride.

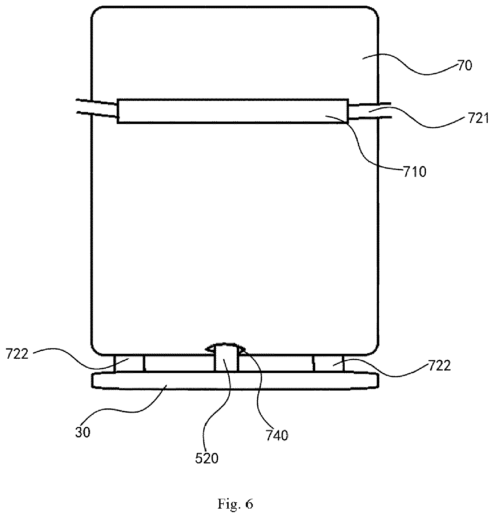

Fig. 6 is a schematic diagram of some components of the stroller 1 of the present disclosure. Specifically, Fig. 6 shows a back surface of the back cushion 70 when the back cushion 70 is in a closed state (the folded portion 730 is not turned up). As shown in Fig. 6, a lower portion of the back cushion 70 may be provided with an opening 740. The lifting belt 520 may pass through the opening 740 and be secured to the seat plate 30. The lifting belt 520 may be generally located at the midpoint between two second securing belts 722.

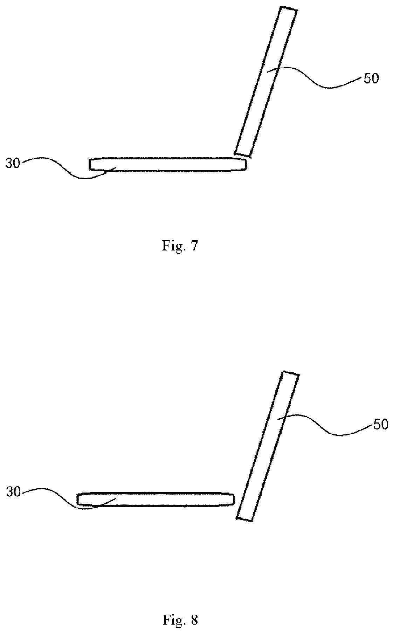

Fig. 7 is a schematic diagram of the backrest plate and the seat plate of the stroller in a position relative to each other, and Fig. 8 is a schematic diagram of the backrest plate and the seat plate of the stroller in another position relative to each other. As shown in Fig. 7, when the backrest plate 50 is not subject to an external force (for example, when the stroller is empty), a lower end of the backrest plate 50 may abut on the seat plate 30 (the gap between the backrest plate 50 and the seat plate 30 shown in Fig. 7 is only for better understanding the relationship between the both plates). When the backrest plate 50 is under the pressure exerted by the infant seating thereon, due to the restraint of the lifting belt 520, the backrest plate 50 and the seat plate 30 still maintain the relative position shown in Fig. 7. In contrast, if the lifting belt 520 is not provided, the pressure applied to the backrest plate 50 may cause the lower end of the backrest plate 50 to drop below a horizontal plane where the seat plate 30 is located (as shown in Fig. 8), thus the center of gravity of the infant relying on the backrest plate 50 will move backward. It should be noted that the situation shown in Fig. 8 is an example that the backrest plate 50 is stressed in the case that the lifting belt 520 is not provided, and the backrest plate 50 may also be located in other positions when a force is applied. The center of gravity of the infant at each of these positions moves backward comparing with the situation that no force is applied to the backrest plate 50. Such movements of the center of gravity are generally not considered by designers of strollers. This causes the center of gravity of the stroller, which was originally designed to be in the middle of the axle of the front wheel 210 and the axle of the rear wheel 220, to be undesirably moved closer to the axle of the rear wheel 220, even behind the axle of the rear wheel 220, thereby causing backward overturning of the stroller.

It can be seen that the stroller 1 of the present disclosure takes into account the possible displacement and deformation of the backrest plate 50 when pressure is applied, so as to avoid accidental overturning.

Other embodiments of the present disclosure will readily occur to those skilled in the art upon consideration of the specification and practice of the disclosure disclosed herein. This disclosure is intended to cover any variations, uses, or adaptations of the present disclosure that follow the general principles of the present disclosure and include common knowledge or conventional techniques in the technical field not disclosed by the present disclosure. The specification and examples are to be regarded as exemplary only, with the true scope and spirit of the disclosure being indicated by the claims of the disclosure.

Although the present disclosure has been described with reference to an enumeration of exemplary embodiments, the terminology is used as description and illustration rather than limitation. Since the present disclosure can be embodied in various forms without departing from the spirit and essence of the present disclosure, it should be understood that the above-described embodiments are not limited to any of the foregoing details, but are to be construed in the broadest sense within the scope defined by the claims., therefore all changes that come within the scope of the claims or their equivalents should be covered by the claims.

### Reference Numeral List:

Stroller 1
   Carriage Frame 10
Wheel 20
   Front Wheel 210
   Rear Wheel 220
Seat Plate 30
   Hole 310
Backrest Frame 40
Backrest Plate 50
   Connecting Portion 510
   Lifting Belt 520
   Buckle 530
   Through Hole 540
Seat Cushion 60
Back Cushion 70
   Through Portion 710
   First Securing Belt 721
   Second Securing Belt 722
   Folded Portion 730
   Opening 740

## Claims

1. A stroller (1), comprising:
a carriage frame (10);
a plurality of wheels (20) mounted under the carriage frame respectively;
a seat plate (30) fixed to the carriage frame;
a backrest plate (50) connected to the carriage frame and angled relative to the seat plate; and
a lifting belt (520) connecting the backrest plate with a surface of the seat plate.

2. The stroller according to claim 1, **characterized in that** the stroller further comprises a back cushion (70), and the back cushion wraps the backrest plate.

3. The stroller according to claim 2, **characterized in that** a connecting portion (510) is formed on a rear surface of the backrest plate, an end of the lifting belt passes through the connecting portion and is fixed with a buckle (530), and the connecting portion prevents the buckle from passing away the connecting portion.

4. The stroller according to any one of claims 2 or 3, **characterized in that** an opening (740) is formed on a lower side of the back cushion, and the lifting belt passes through the opening.

5. The stroller according to any one of claims 2 to 4, **characterized in that** a rear surface of the back cushion is formed with a through portion (710) through which a first securing belt (721) passes to secure the back cushion horizontally to the carriage frame, and a lower end of the back cushion is secured to the seat plate by two second securing belts (722).

6. The stroller according to any one of claims 1 to 5, **characterized in that** the lifting belt connects the seat plate with a front surface or a rear surface of the backrest plate.

7. The stroller according to any one of claims 1 to 6, **characterized in that** the lifting belt is capable of applying a pulling force between the seat plate and the backrest plate.

8. The stroller according to any one of claims 2 to 7, **characterized in that** the stroller further comprises a seat cushion (60), which covers the seat plate and is integrally formed with the back cushion.

9. The stroller according to any one of claims claim 1 to 8, **characterized in that** the stroller further comprises a backrest frame (40) which is secured to the seat plate or the carriage frame and is positioned on or above the seat plate, and the backrest plate is connected to the carriage frame by being connected to the backrest frame.

10. The stroller according to any one of claims 3 to 9, **characterized in that** a distance of the lifting belt between the buckle and the seat plate is adjustable.
